# EUROPEAN PATENT APPLICATION

(11) **EP 0 803 435 A1**
(43) Date of publication of application: **29.10.1997**
(21) Application number: 97850066.8
(22) Date of filing: 28.04.1997
(51) Int. Cl.: B64F 1/305

(54) **Method and device for guiding a passenger bridge**

(30) Priority: 26.04.1996 SE 9601623
(71) Applicant: FMT INTERNATIONAL TRADE AB, S-231 32 Trelleborg (SE)
(72) Inventor: Anderberg, Nils-Eric, 231 96 Trelleborg (SE)
(74) Representative: Perklev, Karin Cecilia

(57) **Abstract**

The present invention relates to a method and a device for guiding a passenger bridge for moving a first end thereof to a desired position by pivoting the passenger bridge about its second end and changing the length of the passenger bridge by means of a wheel-mounted supporting device, the passenger bridge having at the first end an end portion which is pivotable in relation to the longitudinal axis of the passenger bridge. During the displacement, the wheels of the supporting device are held either essentially parallel with or essentially perpendicular to the end portion.

## Description

### Technical Field

The present invention relates to a method of guiding a passenger bridge for moving a first end thereof to a desired position by pivoting the passenger bridge about its other end and changing the length of the passenger bridge by means of a wheel-mounted supporting device, the passenger bridge having at the first end an end portion which is pivotable in relation to the longitudinal axis of the passenger bridge.

The invention also concerns a device for carrying out the method, and a passenger bridge.

### Background Art

As a rule, modern airports are equipped with passenger bridges on which the passengers may walk safely between the terminal building and the aircraft, while being sheltered from the rain and the wind.

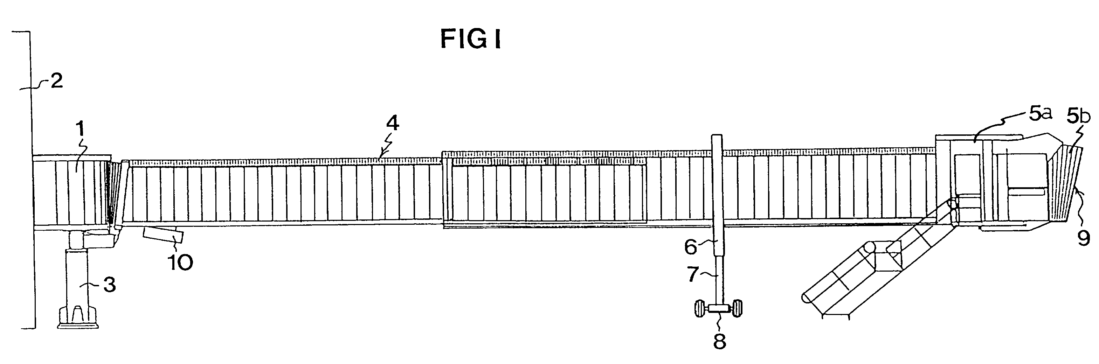

A known passenger bridge going under the name of Apron Drive is schematically shown in Fig. 1. This passenger bridge comprises a rotunda 1 that is connected to a terminal building 2 and is rotatably mounted on a column 3 anchored in the ground. From the rotunda 2 extends a passageway 4, which is made up of two telescoping elements, enabling variation of the length of the passageway. At the end of the passageway located farthest away from the rotunda, there is provided a cabin 5, which comprises a cabin rotunda 5a and an outer cabin 5b which is movable along the periphery of the cabin rotunda 5a and which thus is pivotable in the horizontal plane in relation to the passageway. The passageway element to which the cabin 5 is attached is suspended from a vertically adjustable frame 6, which in turn is supported by a bogie 7 with wheels 8.

The passenger bridge normally occupies a parking position in the vicinity of the place where the aircraft is to come to a halt after landing. When the aircraft has come to a halt, an operator controls the passenger bridge vertically and angularly, pivots the outer cabin and telescopically extends the passageway in the direction of the aircraft, such that the end of the bridge is connected to the door of the aircraft. When the aircraft is to start again, the bridge is operated away from the aircraft correspondingly.

The operator stands in front of a control panel in the cabin 5. He judges what displacements of the bridge are necessary by looking out through the opening 9 of the cabin. By means of a joystick he selects the direction and speed of the displacement. The joystick is connected to the setting of the bogie. If the operator moves the joystick straight forwards and the bogie is set such that the wheels are directed perpendicular to the longitudinal axis of the bridge, the bridge will thus move laterally. To make it possible for the operator to know in what direction he is to move the joystick, an image of the wheels is shown on a display on the control panel. The image comes from a video camera 10 which is mounted on the underside of the bridge and directed to the wheels. The outer cabin 5b is operated by means of a button, which is connected to a motor for pivoting the outer cabin.

Owing to its complexity, the operation of the bridge requires operators with special training, which of course is expensive for the airlines. Furthermore, it takes a long time to perform the connection, and it happens that the bridge bumps into the aircraft as a result of mis-manoeuvring on the part of the operator, thus damaging the aircraft.

US 3,577,838 discloses a method of guiding a passenger bridge for connection of its one end to an aircraft. This passenger bridge is supported by a wheel assembly with two pairs of wheels which are each rotatable about a vertical axle. The pairs of wheels are set so as to be either essentially parallel with the longitudinal axis of the bridge for telescoping of the bridge or essentially perpendicular to this for pivoting the bridge. This technique of guiding the bridge, however, requires that most displacements are carried out first as a telescoping and then as a pivoting operation or vice versa, which is time-consuming and fairly complicated. In connection with pivoting movements close to the aircraft, there is also a risk that the cabin bumps into the aircraft. This is a special problem if the cabin is not aligned with the longitudinal axis of the bridge, but the front edge of one side of the cabin constitutes the outermost end of the bridge. Besides, in this position the operator will have a poor view in the direction in which the bridge moves.

### Summary of the Invention

An object of the present invention therefore is to obviate these drawbacks and provide a simpler and more reliable method for guiding a passenger bridge. A further object is to provide a device for carrying out the method.

The object is achieved by a method and a device having the features stated in claims 1 and 5, respectively, and by a passenger bridge according to claim 10.

According to the invention, the orientation of the wheels thus is synchronised with the orientation of the end portion, such that they are either parallel with the end portion or perpendicular thereto. As a result, the bridge can be driven in four different directions only, i.e. forwards or backwards in the direction of the end portion, or to one side or the other perpendicular to the end portion. This is a very intuitive way of manoeuvring the bridge for the operator who stands in the end portion. If the operator indicates by his operating means that the bridge is to be driven forwards, the bridge will always move forwards in the direction which is the forward direction to the operator when standing and looking straight out from the end portion. The same applies to the other directions. The operator thus need not feel that he moves the operating means in one direction and the bridge moves in another direction. It goes without saying that this significantly facilitates the operation of the bridge and makes the moving thereof safer.

The synchronising of the orientation of the wheels and the orientation of the end portion is made automatically by the control unit of the passenger bridge.

The guiding according to the invention can be applied to passenger bridges which are supported by a bogie with two or more wheels or by some other wheel arrangement with more than one supporting point and one or more wheels for each supporting point. The passenger bridge may have two or more telescoping elements. The end portion may be an outer cabin, which is movable along the periphery of the cabin rotunda, which in this case may be considered as part of the passageway. The end portion may also be a cabin rotunda which is pivotably connected to the passageway and on which the outer cabin is fixed. Other kinds of end portions are also conceivable.

The orientation of the end portion is here defined as the normal direction to the opening of the end portion.

With a view to further simplifying the guiding operation, the end portion is held in a predetermined angular position during the displacement. This means that the operator will always look in the same direction. When the guiding is used to connect a passenger bridge to an aircraft, the end portion is preferably held directed perpendicular to the centre line of the stand of the aircraft. The end portion will then always be directed perpendicular to the aircraft.

The device for carrying out the method comprises a transducer for sensing the angular position of the end portion, a transducer for sensing the angular position of the wheels, and a control unit which guides the wheels in the above manner by means of the signals from these transducers. The control unit can be a PLC or a computer, which contains a suitable control program.

For the operation of the bridge according to the invention, use is made of an operating means with merely four predetermined positions which indicate the four directions in which the bridge can be moved. The operating means can be e.g. a joystick or consist of four buttons.

As mentioned above, the invention can be applied when connecting passenger bridges to aircraft. However, it can also be applied to other craft than aircraft, such as ships.

When the device is used for guiding passenger bridges to and from aircraft, the control unit can be connected to the FIDS database (Flight Information and Destination System) of the airport, from which database information on the centre line and other information that is necessary can be collected.

### Brief Description of the Figures

The present invention will now be described by means of embodiments which concern passenger bridges for aircraft, and with reference to the accompanying drawings, in which:
Fig. 1, as has been discussed above, is a schematic side view of a passenger bridge;
Fig. 2 is a block diagram of the control system according to the invention; and
Figs 3a-3c illustrate schematically a passenger bridge seen from above in various positions and with various settings of the wheels.

### Description of the Preferred Embodiment of the Invention

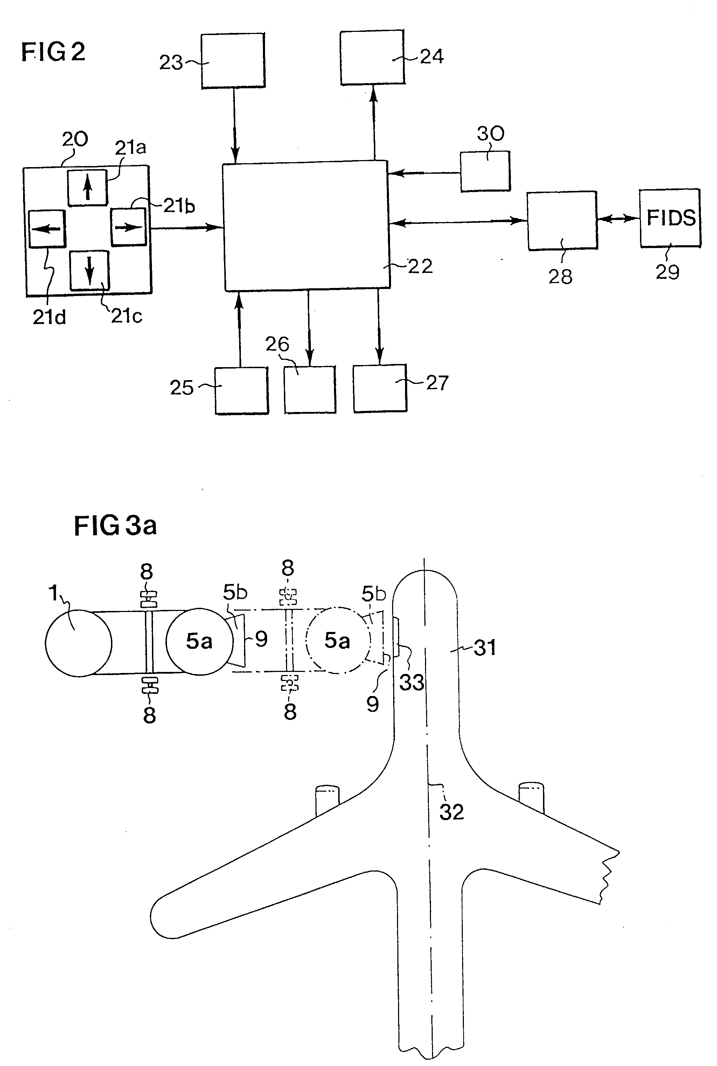

Fig. 2 shows schematically an embodiment of an inventive device applied to a passenger bridge of the type illustrated in Fig. 1.

The device comprises an operating means 20, which is arranged in the outer cabin 5b. The operating means comprises four different buttons 21a-21d for moving the bridge in four different directions. The operating means 20 is connected to a PLC 22, which contains a control program for the bridge.

A first angle transducer 23 is arranged on the outer cabin and measures the angular position of the outer cabin in relation to a suitable reference, for instance the longitudinal axis of the passenger bridge. The PLC 22 has an input from the cabin angle transducer 23, and an output to a cabin motor 24, which pivots the cabin while controlling the PLC 22.

The device also comprises a second angle transducer 25, which is arranged to detect the angular positions of the wheels in relation to a suitable reference. The wheel angle transducer 25, which may have one sensor for each wheel, is connected to the PLC 22. The wheels on the passenger bridge can be driven forwards or backwards by means of hydraulic motors 26, and the angular position of the wheels can be set with the aid of angle control means 27, for instance a hydraulic cylinder which is arranged to turn the bogie on which the wheels are mounted. The PLC 22 is connected to the hydraulic motors 26 and the angle control means 27 for controlling the same.

A third angle transducer 30 is arranged on the roof of the rotunda 2 and adapted to determine the angular position of the passenger bridge in the horizontal plane. Also the third angle transducer 30 is connected to the PLC 22. As an alternative, the third angle transducer 30 may be arranged under the rotunda 2, measuring the turning of the rotunda in relation to the column 3.

Finally, as shown in Fig. 2, the PLC 22 can be connected to a central airport computer 28, which guides a number of passenger bridges in the airport. The central computer 28 is in turn connected to an airport database, FIDS or the like, which contains a great amount of information on, inter alia, the stands in the airport and all arriving and departing flights.

Below follows a description of how the guiding of the bridge is effected when an operator activates the different buttons 21a-21d on the operating means 20. Reference is made to Figs 3a-3c.

Figs 3a-3c are schematic top views of a passenger bridge. The passenger bridge is in the position indicated by full lines. The desired position, to which the bridge is to be moved, is the one indicated by dashed lines.

In the passenger bridge, the wheels 8 are drawn since it is the orientation thereof which is specific to the invention. Moreover, an aircraft 31 is drawn schematically.

When an aircraft has landed, it is to be parked in a predetermined position at a stand. This predetermined position is defined by a centre line, which in Figs 3a-3c is indicated by a dash-dot line 32. Several centre lines may be found at a stand. Each of these is stored in the airport database FIDS 29, where it is also indicated for every arriving aircraft along which centre line it is to be parked. Information on the centre line concerned can thus be sent via the central computer 28 to the PLC 22. It may also be stored permanently in the PLC, since it is known. With the aid of this information and the first and the third angle transducer, the position of the cabin in relation to the centre line can be determined.

In Fig. 3a, the passenger bridge is in a position where its longitudinal axis is directed perpendicular to the centre line 32 along which the aircraft 31 is parked. The bridge is aligned with a door 33 on the aircraft to which the cabin is to be connected. The outer cabin 5b is aligned with the longitudinal axis of the bridge and thus is perpendicular to the centre line. The operator stands in the outer cabin 5b and looks out in the direction of the aircraft. He sees that the outer cabin 5b is aligned with the door on the aircraft. He then presses that button on the operating means which has an arrow pointing in the direction in which he wants to move the bridge. The pressing down of the button is detected by the PLC 22, which via the wheel angle transducer 25 controls the angular position of the wheels 8. Since the wheels 8 are already set in the correct position, the PLC 22 orders the hydraulic motors 26 to drive the wheels forwards as long as the button is pressed down. The displacement of the bridge does not change the angular position of the outer cabin 5b in relation to the centre line and, therefore, the position of the outer cabin 5b does not change. As the bridge moves, the operator can control the speed of motion with a special button which is connected to the PLC.

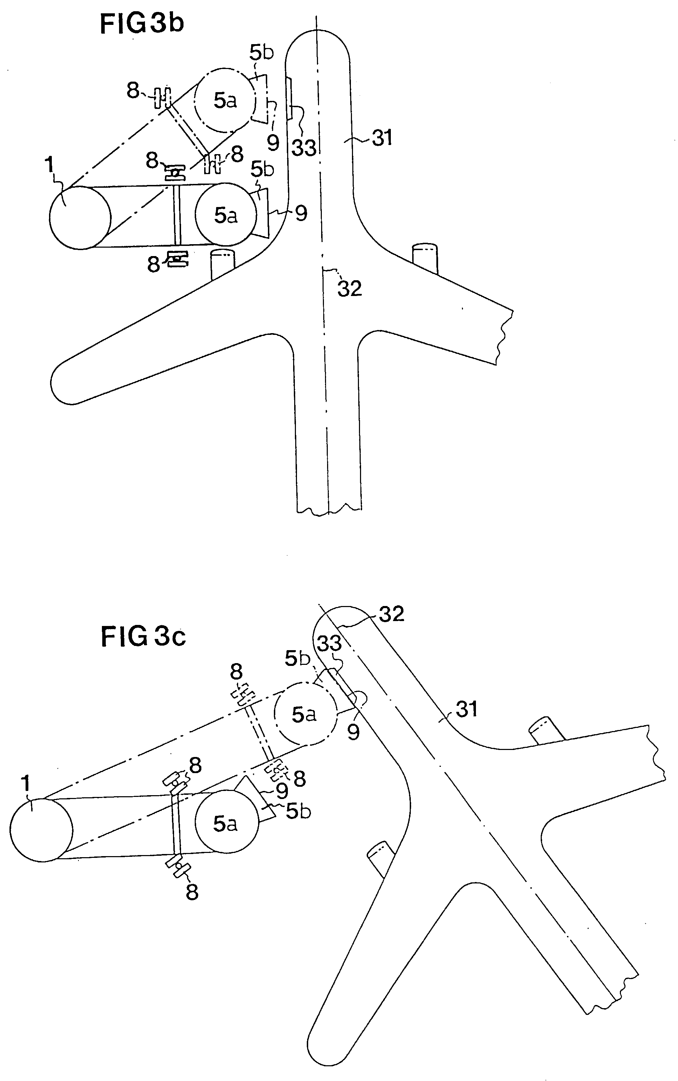

In Fig. 3b, also the longitudinal axis of the bridge is perpendicular to the centre line 32, and the outer cabin 5b is aligned with the longitudinal axis of the bridge. In this case, however, the outer cabin is not aligned with the door 33 on the aircraft 32. Like in the previous case, the operator stands in the outer cabin and looks straight out in the direction of the aircraft. He then sees that the bridge needs to be moved in the lateral direction and therefore presses that button on the operating means which points to the left. The PLC 22 detects the pressing down of the button and checks the setting of the wheels. In this case, the wheels are aligned with the outer cabin and must therefore first be pivoted 90° with the aid of the angle control means 27. Subsequently, the PLC 22 orders the hydraulic motors 26 to drive the wheels forwards. Since the wheels are directed parallel to the centre line, the bridge will be pivoted and at the same time be slightly telescopically extended. Owing to difficulties in setting the wheels exactly in the desired position, the movement of the bridge may deviate somewhat from the ideal movement. During the displacement, the PLC 22 detects the angular position of the outer cabin in relation to the longitudinal axis of the bridge by means of the first angle transducer and the angular position of the bridge in relation to a fixed reference by means of the third angle transducer. Since the angular position of the outer cabin in relation to the centre line changes as the bridge is pivoted, the PLC will control the cabin motor 24 to pivot the outer cabin such that it is all the time kept directed perpendicular to the centre line. As the outer cabin is pivoted, also the wheels are pivoted such that they are all the time kept in the predetermined position in relation to the outer cabin.

In Fig. 3c the centre line is oblique. To make the outer cabin directed perpendicular to the centre line, it has been pivoted in relation to the longitudinal axis of the bridge by means of the PLC 22. The wheels 8 are aligned with the outer cabin 5b. When the operator stands in the outer cabin and looks straight in front of him, he sees the door 33 of the aircraft. He then presses the button having the arrow which is directed to the door. The PLC 22 detects the pressing down of the button, checks that the wheels are directed in accordance with the direction indicated by the button and controls the hydraulic motors 26 to drive the wheels 8 forwards. The bridge will then be pivoted and telescopically extended. By means of the cabin angle transducer 23 and the bridge angle transducer 30, the PLC detects that the angular position of the outer cabin 5b in relation to the centre line 32 changes when pivoting the bridge, and therefore the PLC controls the cabin motor 24 to pivot the outer cabin such that it is held perpendicular to the centre line 32.

All conceivable displacements of the bridge can be carried out in the manner described above by selecting the orientation of the wheels and the direction of rotation of the wheels with the aid of the operating means.

If the pivoting of the outer cabin is limited, which is sometimes the case in practice, the outer cabin cannot, however, in every position be set perpendicular to the centre line and thus also cannot always be moved perpendicular thereto.

It should be noted that the outer cabin 5b need not be held perpendicular to the centre line as the passenger bridge is retracted from the aircraft, when the aircraft is about to leave.

## Claims

1. A method of guiding a passenger bridge for moving a first end thereof to a desired position by pivoting the passenger bridge about its other end (1) and changing the length of the passenger bridge by means of a wheel-mounted supporting device (7, 8), the passenger bridge having at the first end an end portion (5) which is pivotable in relation to the longitudinal axis of the passenger bridge, **characterised** in that in the moving operation, the wheels (8) of the supporting device are set in such a manner as to be either essentially parallel with or essentially perpendicular to the end portion (5).

2. A method as claimed in claim 1, wherein when moving the passenger bridge, the angular position of the end portion is detected, and the end portion (5) is held in a predetermined angular position in relation to a fixed reference.

3. A method as claimed in claim 2, wherein the passenger bridge is arranged to be connected to an aircraft (31), that the predetermined angular position is defined by means of the centre line (32) of the stand of the aircraft, and that the end portion (5) is held directed perpendicular to the centre line in the moving operation.

4. A method as claimed in any one of the preceding claims, comprising the steps of detecting a signal which represents a command for moving the passenger bridge in one of four predetermined directions, two of which are parallel with the end portion and two of which are perpendicular to the end portion, setting the wheels in accordance with the detected direction, and driving them in said direction.

5. A device for guiding a passenger bridge for moving a first end thereof to a desired position, said passenger bridge having a passageway (4), which is pivotable about the other end (1) of the passenger bridge and whose length can be changed by telescoping, an end portion (5) at the first end, said end portion being pivotable in relation to the longitudinal axis of the passenger bridge, and a wheel-mounted supporting device (7, 8) for moving the first end to the desired position by pivoting and telescoping the passageway, **characterised** by a first transducer (23) for sensing the angular position of the end portion (5), a second transducer (25) for sensing the angular position of the wheels (8) of the supporting device, and a control unit (22) which is connected to the first and the second transducer (23, 25) for receiving angle signals from said transducers and which is arranged to control, with the aid of these angle signals, the wheels (8) such that they are either essentially parallel with or essentially perpendicular to the end portion (5).

6. A device as claimed in claim 5, further comprising an operating means (21a-d) having only four predetermined positions for indicating four directions for moving the end of the passenger bridge.

7. A device as claimed in claim 5 or 6, wherein the device is adapted to be used for connection of a passenger bridge to an aircraft, and that the control unit (22) is connected to the FIDS system (29) of an airport.

8. A device as claimed in any one of claims 5, 6 or 7, wherein the control unit (22) is connected to means (24) for pivoting the end portion and arranged to hold the end portion in a predetermined angular position in relation to a fixed reference.

9. A device as claimed in claim 5, further comprising a third transducer (30), which is arranged to determine the angular position of the passenger bridge.

10. A passenger bridge with a first end, which is to be moved to a desired position, and a second end comprising a passageway (4), which is pivotable about the second end and whose length can be changed by telescoping an end portion (5) at the first end, said end portion being pivotable in relation to the longitudinal axis of the passenger bridge and a wheel-mounted supporting device (7, 8) for moving the first end to the desired position by pivoting and telescoping the passageway (4), **characterised** by a device according to any one of claims 5-9.
